# EUROPÄISCHE PATENTSCHRIFT

(11) **EP 3 992 410 B1**
(45) Veröffentlichungstag und Bekanntmachung des Hinweises auf die Patenterteilung: **19.07.2023**
(21) Anmeldenummer: 21203941.6
(22) Anmeldetag: 21.10.2021
(51) Int. Cl.: E06B 9/24, G02B 27/00, H05B 47/11, H05B 47/125, E06B 9/68

(54) **BESCHATTUNGS- UND BELEUCHTUNGSSYSTEM**
SHADING AND LIGHTING SYSTEM
SYSTÈME D'OMBRAGE ET D'ÉCLAIRAGE

(30) Priorität: 27.10.2020 AT 509252020
(43) Veröffentlichungstag der Anmeldung: 04.05.2022
(73) Patentinhaber: HELLA Sonnen- und Wetterschutztechnik GmbH, 9913 Abfaltersbach (AT)
(72) Erfinder: WEITLANER, Robert, 9931 Außervillgraten (AT)
(74) Vertreter: Torggler & Hofmann Patentanwälte - Innsbruck

(56) Entgegenhaltungen:
- KR-B1- 101 049 496
- US-A- 6 064 949
- US-A1- 2014 303 788
- US-A1- 2015 234 369

## Beschreibung

Die vorliegende Erfindung betrifft ein Beschattungs- und Beleuchtungssystem für einen Raum in einem Gebäude, mit zumindest einer Beschattungsvorrichtung zum Beschatten von Sichtöffnungen, insbesondere von Fenstern, des Gebäudes, zumindest einer Beleuchtungsvorrichtung zum Beleuchten des Raumes, zumindest einem Außensensor zum Erfassen wenigstens eines von außerhalb auf den Raum wirkenden Außenparameters, zumindest einem Innensensor zum Erfassen eines 3D-Abbilds des Raumes, zumindest einer Position einer im Raum befindlichen Person in diesem 3D-Abbild und einer Blickrichtung dieser zumindest einen Person und einer Steuereinheit zum Ansteuern der zumindest einen Beschattungsvorrichtung und der zumindest einen Beleuchtungsvorrichtung, wobei die zumindest eine Beschattungsvorrichtung und die zumindest eine Beleuchtungsvorrichtung durch die Steuereinheit in Abhängigkeit der vom Außensensor und vom Innensensor gemessenen Werte ansteuerbar sind. Zudem betrifft die Erfindung ein Gebäudeautomatisierungssystem zum Überwachen, Steuern und Regeln von Anlagen in einem Gebäude, wobei dieses Gebäudeautomatisierungs-system eine solche Beschattungs- und Beleuchtungsvorrichtung aufweist.

Beschattungs- und Beleuchtungssysteme werden in vielfältiger Art und Weise in Gebäude eingesetzt, um den darin befindlichen Personen einen angenehmes Aufenthaltsgefühl zu geben. Besonders in einer Arbeitsumgebung kommt es dabei darauf an, dass die Beschattung und die Beleuchtung gut austariert sind. Das heißt, bei starker Sonneneinstrahlung soll durch die Beschattung eine große Hitzeentwicklung und ein Blenden verhindert werden, gleichzeitig soll möglichst viel Tageslicht zur Beleuchtung des Raums zur Verfügung stehen. Zum Erreich von Zielbeleuchtungsniveaus wird Kunstlicht effektiv und effizient zugeschaltet. Kurzum: Eine intelligente Beschattung ist gefragt.

Bevor im Detail auf die vorliegende Erfindung eingegangen wird, sei der Stand der Technik erläutert.

Vor allem beim Arbeiten im Büroumfeld soll der Mensch möglichst vor Blendung geschützt werden. Als Anhaltspunkt für eine Blendung gilt dabei im Wissenschaftskreis und in einer europäischen Norm (EN 17037) die sogenannte Daylight Glare Probability (kurz DGP), wobei ein Wert von unter 0,40 erreicht werden sollte. Auch eine Überhitzung auf über 28° C soll vermieden werden, um vor langfristigen körperlichen Schäden zu schützen. Dazu werden bereits Schutzmechanismen eingesetzt (z. B. wird ein Blendschutz aktiv gestellt oder ein Sonnenschutz abgefahren, o. ä.). Beim Stand der Technik basieren solche Schutzmechanismen auf der Detektion der Menschen an ihrem Arbeitsplatz. Dies erfolgt beispielsweise über eine Präsenz oder Bewegungsdetektion oder über Abwesenheits-Automatismen. Dabei kommen zum Beispiel optische Sensoren der Firma Steinel mit der Typenbezeichung "HDP2 KNX" zum Einsatz, mit welchem die Anzahl der Menschen in einem Raum detektiert werden kann.

Von der Firma infsoft GmbH gibt es zum Beispiel einen sogenannten "Infrarot Thermopile Sensor", welcher zur Verfolgung von Bewegung und Temperatur von Personen und Objekten verwendet werden kann. Der Infrarotsensor misst die aktuelle Temperatur sowie Temperaturgradienten innerhalb des Sichtbereichs und stellt die Temperaturverteilung in entsprechenden Farben dar. Sogenannte Präsenzmelder auf Basis von passivem Infrarot (PIR) erfassen physische Präsenz im Innenbereich und sind geeignet für Büros, öffentliche Gebäude, Flurbereiche, Lager- und Waschräume. Eine der häufigsten Anwendungen ist die präsenzabhängige und energieeffiziente Lichtsteuerung. Die Präsenzdetektion hat einen hohen Effekt hinsichtlich Reduktion des Kunstlichtbedarfs. Das Kunstlichtsystem schaltet sich sofern nötig so stark zum Tageslicht hinzu bis die Zielbeleuchtungsstärke erreicht ist. Ultraschallsensoren erfassen Personen, Objekte oder Füllstände mit hoher Präzision und über einen weiten Entfernungsbereich, auch in Gegenwart von Nebel, Schmutz oder Staub.

Ein gewisser Grad von Individualisierung wird heutzutage auch dadurch erreicht, dass Lokalisierungsfeatures von Smartphones verwendet werden. Die Person bzw. der Bewohner speichert Grundeinstellungen in seinem Smartphone, die dann an jedem seiner Arbeitsplätze/Aufenthaltsbereiche angewendet werden.

Hinsichtlich visuellen Komforts ist die Detektion der Anwesenheit allerdings zu wenig. Blendung ist ein Phänomen, das vom Außenraum und dessen Lichtquellen und Helligkeitsverteilungen, der Position im Innenraum, der Blickrichtung und dem gesamten Rauminterieur abhängt. Modelle hierzu sind z.B. die Daylight Glare Probabilty der EN 17037 oder vertikale Beleuchtungsstärken als Schätzer. Es ist von Nachteil die ganze Fassade zu schließen um die Blendschutzfunktion - bei bekannter Sonnenposition - zu realisieren. Dadurch entsteht erhöhter Kunstlichtbedarf wegen geringeren Tageslichtbeleuchtungsstärken und der Kontakt zur Außenwelt ist eingeschränkt (Anforderungsdefinition in EN 14501).

Hinsichtlich Energieflussoptimierung sind Teilaspekte in der Wissenschaft bekannt. Zum Beispiel wird im von Forschungsprojekt DALEC (Day- and Artificial Light with Energy Calculation) zur Verfügung gestellten Berechnungsprogramm für ausgewählte Arbeitspunkte die ganzjährige Energie- und Komfortcharakterisierung von Gebäuden möglich (www.dalec.net). Dort wir mit winkelabhängigen Gesamtenergiedurchlassgraden der Energiefluss durch die Fassade berechnet, wobei Winkelabhängigkeit im Sinne von Einfallswinkel und auch von Stellwinkel zu betrachten ist.

Das koreanische Patent KR 10-1049496 B1 beschreibt detailreich, dass auf Basis von Außen- und Innendaten und Heizlasten aus dem Building Management System die Energieflüsse im Zeitschritt optimiert werden können, bei Berücksichtigung diverser temporärer oder thermischer Komfortkriterien. Auf Basis von Außenwetterdaten und Innenraumdaten inklusive der Information über die Benutzer (Abstand zum Fenster und Blickrichtung als Winkel zum Fenster) kann die Steuerung des Sonnenschutzes auf Basis einer Zielfunktion zwischen Komfort und Energie optimiert werden.

Die US 2018/0101733 A1 beschreibt ein Verfahren zur Personenerkennung vor Bildschirmen unter dem Aspekt der Sicherheit und Authentifizierung.

Die WO 2019/183232 A1 beschreibt ein Verfahren zur zonenweisen Steuerung von schaltbaren Gläsern auf Basis der Bewölkung. Hier wird beschrieben, dass ein Building Management Systeme (BMS) zur Erhaltung eines komfortablen Umfelds für die Nutzer bei gleichzeitiger Minimierung von Heiz- und Kühlkosten arbeitet.

Die US 2018/0157141 A1 beschreibt ein BMS (Building Management System), das eine Multi-Anwendungs-Steuerung für mehrstufige Fenster zeigt.

US 10,242,269 B2 beschreibt die koordinative Bewohnererfassung mittels IR-Technologie zur Steuerung von Kunstlicht und anderen Umgebungsparametern im Haus.

Die US 10,513,415 B2 beschreibt detailliert die Sensortechnologie zur Erfassung von Menschen und die Anwendung in der Passagierkontrolle.

Die US 2016/0195856 A1 beschreibt eine Multisystem, das den Nutzer beobachtet und auch dessen Blickrichtung. Zudem erfolgt eine ergonomische Betrachtung. Ein Display kann nach einiger Zeit die Position verändern, um eine Dauer-Starrhaltung des Nutzers zu reduzieren.

Die WO 2019/183289 A1 beschreibt ein Steuersystem mit einem 3D-Außenraummodell. Gesteuert werden über ein schaltbares Glas einzelne Zonen von Fenstern. Die Innenraumberechnung erfolgt über vordefinierten Flächen, auf denen der Benutzer zu erwarten ist.

EP 2 760 164 B1 beschreibt eine intuitive und selbstlernende Wohn- und Gebäudekomfortsteuerung samt verschlüsselter, drahtloser oder drahtgebundener Datenübertragung.

Aus der WO 2016/058695 A1 geht eine Vorrichtung und ein Verfahren zur Reduzierung der Blendwirkung in einem Raum eines Gebäudes hervor. Die Lichtquelle kann pixelig abgedunkelt werden. Die Berechnung sieht vor, dass dann mit einer Kamera untersucht wird, ob Schatten auf die Nutzer fallen. Der ergonomische Vorteil wird darin gesehen, dass nicht vollständig abgedunkelt werden muss.

Die Aufgabe der vorliegenden Erfindung besteht nun darin, ein gegenüber dem Stand der Technik verbessertes Beschattungs- und Beleuchtungssystem zu schaffen. Insbesondere sollen die bekannten Nachteile zumindest teilweise vermieden werden. Es soll eine möglichst automatisierte, einfache und effiziente Steuerung des Systems möglich sein.

Dies wird durch ein Beschattungs- und Beleuchtungssystem mit den Merkmalen von Anspruch 1 gelöst. Demnach ist erfindungsgemäß vorgesehen, dass abhängig von der erfassten Blickrichtung und von der erfassten Position und vom 3D-Abbild des Raumes und abhängig vom wenigstens einen Außenparameter ein auf die Person, insbesondere auf ein Auge der Person, wirkender Lichtparameter ermittelt wird, wobei abhängig von diesem auf die Person wirkenden Lichtparameter die zumindest eine Beschattungseinrichtung und/oder die zumindest eine Beleuchtungsvorrichtung ansteuerbar sind/ist.

Somit wird vom System ein individueller, auf die zumindest eine Person im Raum abgestimmter Lichtparameter ermittelt. Dieser Lichtparameter dient dann als Basis für die Beschattung und/oder Beleuchtung. Auch wenn sich mehrere Personen im Raum aufhalten, kann für jede dieser Personen ein individueller (und jeweils aktueller) Lichtparameter ermittelt werden, woraufhin eine individuelle Anpassung der Beschattung und/oder Beleuchtung erfolgt.

Bevorzugte Ausführungsbeispiele der vorliegenden Erfindung sind in den abhängigen Ansprüchen angegeben.

Der Außenparameter kann einen oder mehrere Werte umfassen. Hinsichtlich der Beleuchtung sollte zumindest eine radiometrische Größe oder eine photometrische Entsprechung in den Außenparameter einfließen. Zusätzlich (oder alternativ) kann die Außentemperatur in den Außenparameter einfließen.

Konkret ist bevorzugt vorgesehen, dass der wenigstens eine Außenparameter auf einer Bestrahlungsstärke und/oder einer Beleuchtungsstärke und/oder einer Strahlungsdichte (oder Strahlungsdichteverteilung) und/oder einer Außentemperatur basiert.

Die Bestrahlungsstärke (E) (auch Strahlungsflussdichte) ist der Begriff für die gesamte Leistung der eingehenden elektromagnetischen Energie, die auf eine Oberfläche trifft, bezogen auf die Größe der Fläche. Die Bestrahlungsstärke wird in Watt pro Quadratmeter angegeben und stellt eine radiometrische Größe dar.

Im Gegensatz dazu ist die Beleuchtungsstärke die photometrische Entsprechung. Die Beleuchtungsstärke Eᵥ beschreibt den flächenbezogenen Lichtstrom, der auf ein beleuchtetes Objekt trifft. Ihr steht gegenüber die Lichtstärke, die den raumwinkelbezogenen Lichtstrom einer Lichtquelle beschreibt. Die SI-Einheit der Beleuchtungsstärke ist das Lux (Ix).

Die Strahldichte oder Strahlungsdichte (L) (auch spezifische Intensität) liefert detaillierte Information über die Orts- und Richtungsabhängigkeit der von einer Sendefläche abgegebenen Strahlung. Die Strahldichte gibt an, welche Strahlungsleistung von einem gegebenen Punkt der Strahlungsquelle in die durch den Polarwinkel und den Azimutwinkel gegebene Richtung pro projiziertem Flächenelement und pro Raumwinkelelement ausgesendet wird. Die Strahldichte wird in Watt pro Quadratmeter und pro Steradiant angegeben. Die Strahldichte ist eine radiometrische Größe. Die Leuchtdichte - angegeben in cd/m² - bildet die photometrische Entsprechung.

Es können neben den angeführten beispielhaften Außenparametern auch zusätzlich (oder alternativ) die Leuchtdichte, die Lichtstärke, die Strahlstärke oder andere radiometrische Größen oder deren photometrische Entsprechung verwendet werden. Wenn auch die Außentemperatur als ein Außenparameter herangezogen wird, so kann dieser zum Beispiel in Grad Celsius oder in Kelvin erfasst werden.

Weiters ist bevorzugt vorgesehen, dass der wenigstens eine Außenparameter vom Außensensor gemessene und/oder berechnete Werte und/oder Verhältnisse basierend auf der Bestrahlungsstärke und/oder der Beleuchtungsstärke und/oder der Strahlungsdichte und/oder der Außentemperatur repräsentiert. Das heißt, diese Werte können auch teilweise auf Berechnungen basieren und bestimmte Verhältnisse zwischen verschiedenen Werten einbeziehen (z. B. direkte Anteile zu diffusen Anteilen; ein Viertelraum zu einem anderen Viertelraum).

Grundsätzlich muss nur ein Außensensor vorgesehen sein. Dieser kann aber durchaus im Raum des Gebäudes angeordnet sein, solange eine ausreichende Betrachtung der Umgebung außerhalb des Raumes möglich ist.

Es können auch mehrere Außensensoren vorgesehen sein, mit welchen unterschiedliche Werte erfasst werden oder welche auf unterschiedliche Bereiche der Umgebung gerichtet sind. Diese Werte können gemeinsam (verrechnet) oder einzeln verarbeitet werden.

Konkret kann vorgesehen sein, dass der zumindest eine Außensensor ein Pyranometer ist. Beispielhaft sei hier auf den "SPN1 Sunshine Pyranometer" der Firma "Delta-T Devices" verwiesen.

In den Außenparameter können auch Werte einfließen, welche sich auf die Tageszeit, den Sonnenstand und/oder die geographische Position des Gebäudes auf der Erdkugel beziehen. Diese müssen nicht aktuell erfasst werden, sondern können hinterlegt sein oder ausgelesen werden oder über das Internet aktuell abgerufen werden.

Ein ähnlicher fixer Wert kann für den Horizont (vom Standort des Gebäudes aus) hinterlegt sein. Somit können auch Berge und Nachbargebäude als Schattengeber ständig berücksichtigt werden. Nachbargebäude können im Fall einer Veränderung ergänzt werden, bleiben dann wieder fix/statisch.

Hinsichtlich des wenigstens einen Innensensors ist es grundsätzlich möglich, dass mit diesem Innensensor ähnliche radiometrische oder photometrische Größen erfasst werden können.

Bevorzugt ist vorgesehen, dass der zumindest eine Innensensor zum Erfassen des 3D-Abbilds eine TOF-Kamera ist. TOF-Kameras sind 3D-Kamerasysteme mit Laufzeitverfahren (englisch: time of flight, kurz TOF). Dazu wird die Szene - in diesem Fall der Raum im Gebäude - mittels eines Lichtpulses ausgeleuchtet, und die Kamera misst für jeden Bildpunkt die Zeit, die das Licht bis zum Objekt und wieder zurück braucht. Die benötigte Zeit ist direkt proportional zur Distanz. Die TOF-Kamera liefert somit für jeden Bildpunkt die Entfernung des darauf abgebildeten Objektes. Durch diese TOF-Kamera wird eine dreidimensionale Punktwolke erzeugt. Die Intensität des reflektierten Strahls gibt eine Indikation für den optischen Reflexionsgrad des Materials.

Es können auch mehrere TOF-Kameras im Raum angeordnet sein. Dadurch können mehrere Punktwolken erzeugt werden, die dann zu einem vollständigeren 3D-Abbild durch Fusion zusammengeführt werden. Es könnten auch andere Verfahren zur 3D-Generierung verwendet werden, z. B. 4D-Radar oder das System LIDAR.

Grundsätzlich ist es möglich, dass mit dem Innensensor in Form der TOF-Kamera auch die Position der Person im Raum detektiert wird. Zusätzlich (oder alternativ) kann aber ein weiterer Innensensor in Form eines Präsenzdetektors im Raum angeordnet sein. Mit diesem Präsenzdetektor können mehrere Personen im Raum detektiert werden und deren Position im Raum ermittelt werden. Die Daten des Präsenzdetektors können dann mit jenen der TOF-Kamera zusammengeführt werden.

Bevorzugt kann auch vorgesehen sein, dass mehrere Innensensoren zum Erfassen mehrerer Personen im Raum angeordnet sind.

Die Daten der TOF-Kamera und/oder des Präsenzdetektors können bevorzugt verwendet, um auch die Blickrichtung der Personen(en) zu ermitteln.

Darüber hinaus ist bevorzugt vorgesehen, dass das 3D-Abbild in einem Koordinatensystem angeordnete Oberflächen enthält, wobei über den zumindest einen Innensensor Reflexionsgrade dieser Oberflächen des Raumes, vorzugsweise durch Schätzung oder Berechnung, ermittelbar sind. Konkret kann hier ein bestimmter Reflexionswert pro Pixel (z. B. 340 x 680 VGA) ermittelt werden.

Die bis hierhin angeführten Parameter beziehen sich auf erfasste Werte, die direkt von den Standorten der jeweiligen Sensoren abhängen, wobei ausgehend von diesen Standorten durchaus ein guter Überblick über die Gegebenheiten außerhalb und innerhalb des Raumes des Gebäudes gegeben ist.

Ein wesentlicher Faktor ist nun aber, wie die Gegebenheit im Aufenthaltsbereich der Person(en) sind. Besonders wichtig sind hierbei die Parameter im Bereich des Auges bzw. Gesichtes der Person(en).

Hierzu ist bevorzugt vorgesehen, dass aus den durch den wenigstens einen Außensensor und den wenigstens einen Innensensor zur Verfügung stehenden Außenparametern und Innenparametern (3D-Abbild, Position und Blickrichtung) ein individueller Lichtparameter für jene Position oder jenen Bereich ermittelt wird, wo sich das Gesicht (bzw. die Augen) der Person(en) befindet.

Bevorzugt ist vorgesehen, dass der Lichtparameter einem Beleuchtungsparameter entspricht. Ein Beleuchtungsparameter kann ein nicht photometrischer, biologisch wirksamer Parameter sein (welcher z. B. das melanopische Potenzial beinhaltet, wobei der melanopische Wirkungsfaktor ein Maß für die circadiane Wirkung einer Lichtquelle ist).

Besonders bevorzugt ist vorgesehen, dass der Beleuchtungsparameter durch die vertikale Beleuchtungsstärke definiert ist. Dabei kann die Drei-Phasen-Methode (Three-Phase Method for Simulating Complex Fenestration with Radiance) zur Ermittlung der vertikalen Beleuchtungsstärke dienen (wird weiter unten in der Figurenbeschreibung noch näher erläutert).

Aber nicht nur die Beleuchtung im Bereich der Person(en) ist von Relevanz, auch die Blendung. Deshalb ist alternativ (oder zusätzlich) bevorzugt vorgesehen, dass der Lichtparameter einem Blendungsparameter entspricht, wobei dieser Blendungsparameter auf Basis einer Daylight Glare Probability definiert ist oder einer anderen Blendungsmetrik definiert ist. In die Berechnung dieser Daylight Glare Probability fließen die Leuchtdichte und der Raumwinkel sowie die vertikale Beleuchtungsstäre ein. Die Formel besteht qualitativ aus Summe über Leuchtdichte im Raumwinkel x Raumwinkel x Ortsgewichtungsfaktor + vertikaler Beleuchtungsstärke. Die Leuchtdichte wird wiederum aus dem 3D-Abbild mit den Oberflächeneigenschaften (Reflexionsgrad) und den Daten des Außenparameters abhängig von der Blickrichtung und Position der Person(en) berechnet.

Als Beschattungsvorrichtung kann alles verwendet werden, was die Strahlungstransmission in das Gebäude verändern kann. Als Beleuchtungsvorrichtung kann jegliche künstliche Lichtquelle verwendet werden.

Bevorzugt ist vorgesehen, dass die Beschattungsvorrichtung als mechanisches Beschattungselement (z. B. als Jalousie, als Vorhang, als Markise, als Rollladen, als Rollo, als Vertikaljalousie oder als Plissee) und/oder als intelligentes Glas ausgebildet ist.

Als intelligentes Glas (englisch Smart Glass oder Dynamic Glass) werden tönbare Verglasungen bezeichnet, deren Licht- und Strahlungsdurchlässigkeit sich durch das Anlegen einer elektrischen Spannung (Elektrochromie), veränderte Lichtverhältnisse (Photochromie) oder Erwärmung (Thermochromie) verändert. Ein Fenster aus intelligentem Glas kann mehrere, unterschiedlich ansteuerbare und unterschiedlich tönbare Abschnitte bzw. Bereiche aufweisen.

Besonders bevorzugt ist vorgesehen, dass die Beschattungsvorrichtung mehrere, vorzugsweise matrixartig angeordnete, Beschattungsfelder aufweist, wobei für jedes Beschattungsfeld zumindest zwei, vorzugsweise zumindest vier, Abschattungsstufen einstellbar sind.

Hier kann vorgesehen sein, dass die Beschattungsfelder in der Gesamtheit eine (große) Sichtöffnung zur Gänze abdecken können.

Es kann vorgesehen sein, dass die die einzelnen Beschattungsfelder unterschiedliche Größen aufweisen. Um eine einfache Ansteuerung und eine gezielte und detailreiche Abschattung zu ermöglichen, ist bevorzugt vorgesehen, dass die einzelnen Beschattungsfelder dieselbe Größe aufweisen. Zum Beispiel können die Beschattungsfelder eine Größe zwischen 1,5 m² und 25 cm², vorzugsweise zwischen 2000 cm² und 100 cm², aufweisen.

Weiters ist bevorzugt vorgesehen, dass die Beleuchtungsvorrichtung ein Leuchtmittel, beispielsweise eine Leuchtdiode, einen, vorzugsweise eingebauten, abgehängten oder alleinstehenden, Träger und ein Stromzuführmittel aufweist. Das Leuchtmittel kann dimmbar sein oder nur zwei Zustände (aus/ein) aufweisen. Die Lichtverteilung kann variabel sein (zum Beispiel kann der direkte und der indirekte Anteil einer alleinstehenden Leuchte berücksichtigt werden).

Die Interaktion der Person mit dem gesamten System (im Speziellen mit der Steuereinheit) kann über einen Computer oder auch über ein Smartphone-App erfolgen. Diese dienen somit als Bedienoberfläche.

Die Steuereinheit (Berechnungszentrale) ist bevorzugt als Schaltschrank mit einer Recheneinheit und mit der Recheneinheit verbindbaren Modulen für die Beleuchtungsvorrichtung und für die Beschattungsvorrichtung ausgebildet. Es können auch noch andere Ein- und Ausgänge vorgesehen sein.

Bevorzugt ist vorgesehen, dass die Bedienoberfläche (inklusive Bildschirm und Eingabemittel) mit der Steuereinheit signaltechnisch verbunden ist.

Es sei auch noch angeführt, dass die Ermittlung der diversen Parameter in Echtzeit erfolgt. Das heißt, es werden in regelmäßigen Abständen sämtlich Parameter neu erfasst und aktualisiert, womit auch Bewegungen der Person(en) entsprechend bei der Steuerung des Systems berücksichtigt werden können.

Schutz wird auch begehrt für ein Gebäudeautomatisierungssystem zum Überwachen, Steuern und Regeln von Anlagen in einem Gebäude mit einem erfindungsgemäßen Beschattungs- und Beleuchtungssystem.

Derartige, zum Gebäudeautomatisierungssystem zugehörige Anlagen können neben den Beschattungsvorrichtungen und Beleuchtungsvorrichtungen auch die Klimaanlagen, die Heizung, die Elektronik, usw. sein. Als grundsätzliche technische Elemente kann das Gebäudeautomatisierungssystem Automationseinrichtungen (z. B. Steuerungseinheiten DDC-GA), einen Schaltschrank, Feldgeräte (wie Sensoren und Aktoren), Raumautomationssysteme, Verkabelung und Bussysteme, Server und Gateways sowie Management- und Bedieneinrichtungen aufweisen.

Als Basis kann zum Beispiel der KNX-Standard für einen Feldbus der Gebäudeautomation verwendet werden.

Im Folgenden sind wesentliche Punkte und bevorzugte Ausführungsbeispiele der Erfindung nochmals in anderen Worten angegeben.

Die Erfindung beschreibt ein System zur modellbasierten-prädiktiven Steuerung eines diskretisierten Beschattungs- und Beleuchtungssystem unter der Zielanforderung der Erfüllung visueller Ergonomieanforderungen und der Energieoptimierung. Diese Diskretisierung kann vielfältig erfolgen: Durch einen lamellenartiger Behang, der in Höhe zwei unterschiedliche Winkelstellungen aufweist. Durch benachbarte Behänge, die unabhängig voneinander fahrbar sind. Durch einen textilen Behang, der streifenweise fahrbar ist. Oder durch dynamisches Glas, das als Pixelarray ansteuerbar ist, wobei bereits zwei vertikale Abschnitte als zwei Pixel zu interpretieren sind. Z. B. kann das Schließen eines einzelnen Fassaden-Pixels für die Erreichung dieses Optimums ausreichend sein.

Mit der Erfindung ist es möglich, eine Blendung (Teil von visuellem Komfort) einer im Raum befindlichen Person in jeder beliebigen zeitlichen Auflösung, von jedem beliebigen Arbeitspunkt und jeder beliebigen Blickrichtung zu verhindern.

Es ist nun möglich, die solaren Energieströme durch die Fassade zu berücksichtigen (radiometrisch und photometrisch).

Auch der Energiebedarf für Kunstlicht kann berücksichtigt werden.

Speziell ist vorgesehen, dass auf die aktuelle Position (x, y, z im Koordinatensystem) und die Blickrichtung (x_{view}, y_{view}, z_{view}) der Person in Relation zum Umfeld reagiert wird und die optimale Konfigurationen gefunden wird, die sich hinsichtlich visueller Ergonomie (z. B. visueller Komfort) und Energieströmen in das bzw. aus dem Gebäude finden lässt.

Die Sensorkomponente (Innensensor) kann beliebig im Raum positioniert sein, also z. B. an die Decke montiert oder auf Bildschirme angeklipst werden.

Bevorzugt umfasst der wenigstens eine Innensensor ein Messsystem in Form von Präsenz- oder Bewegungsdetektoren, mit welchen auch schnelle menschliche Gesten oder Körperteilbewegungen detektierbar sind.

Die Lokalisierung der anwesenden Personen, insbesondere deren Kopfposition, Blickrichtung und Körperhaltung kann mittels Schallwellen oder elektromagnetischen Wellen (auch optisch durch Fotografie) und einer künstlichen Intelligenz in einem gebäudeweiten Koordinatensystem erfolgen.

Die Lokalisierung des Arbeitsplatzumfeldes im Raum, insbesondere Displays, Bildschirme, Arbeitsflächen, Tische und Stühle erfolgt durch die vorgenannten Technologien.

Die Erfassung der Fassadeneigenschaften (Fensterposition, Sonnenschutz, Tageslichtsystem, ...) erfolgt ebenfalls durch eine vorgenannte Technologien oder z. B. anhand von Plandaten.

Die Erfassung des Außenraums erfolgt durch bekannte Sensorsysteme, die Direktanteile und Diffusanteile der Bestrahlung und Beleuchtung messen und einen Bewölkungsgrad messen oder schätzen, vorzugsweise inklusive der Umgebungsbebauung aus z. B. Plandaten oder Vermessungstätigkeiten.

Die Berechnung der photometrischen Effekte bezogen auf den gefundenen Blickpunkt und Blickrichtung der Person erfolgt in Abhängigkeit der Fassadekonfiguration (Fenster), z. B. durch Backward-Raytracing-Methoden (z. B. Viewmatrix der Radiance 3-Phasen Methode), Forward-Raytracing-Methoden, Radiosity-Methoden, Schätzung der vertikalen Beleuchtungsstärke, oder ähnliches.

Die Berechnung der Energieströme je möglicher Fassadenkonfiguration erfolgt in der zentralen oder dezentralen Recheneinheit (Steuereinheit).

Die Verwendung von Temperatursensoren innen und außen ist möglich.

Bevorzugt erfolgt auch ein Finden des optimalen Settings der Komponenten (z. B. Fassade, Kunstlicht) unter den Aspekten Energiebedarf und visuelle Ergonomie über die Recheneinheit nach mathematischer Zieloptimierungsmethode.

Es kann ein Versenden digitaler oder analoger Fahrbefehle an das Fassadensystem (Beschattungsvorrichtung) und Kunstlichtsystem (Beleuchtungsvorrichtung) erfolgen.

Die Kontrolle des Systems kann durch z. B. bidirektionalen Datenaustauch zwischen Beleuchtungsvorrichtung, Beschattungsvorrichtung und Steuereinheit erfolgen. Hierzu kann wieder auf die oben angeführte EP 2 760 164 B1 verwiesen werden.

Die Personen-Lokalisierung kann auch zur Gestensteuerung verwendet werden.

Der Innensensor (z. B. in Form einer TOF-Kamera) erfasst die Geometrie und Reflexionseigenschaften in Relation zu einem sichtbaren Referenzfeld. Dieses Referenzfeld hat definierte diffuse Reflexionseigenschaften und dient als Kalibrierung des Intensitätsbildes einer optischen Messvorrichtung (z. B. Time of Flight)

Die modellbasierte Steuerung erstellt aus den 3D-Daten ein Modell, inklusive geschätzter Reflexionsgrade des Raumes. Mit dem Modell des Außenraums, aus Planungsdaten inkl. Topographie und dem aktuellen Himmelszustand kann das Steuerungsmodul energieoptimale Konfigurationen auswählen.

Der Energiebedarf für Kunstlicht kann in einem Einlernprozess erkannt werden. Dazu erfolgt beispielsweise ein Monitoring der Stromaufnahme der Beleuchtungsvorrichtung und eine Messung der Beleuchtungsstärke (Kunstlichtanlage).

Der Tageslichteintrag wird mit gängigen Faktor-Methoden (z. B. Tageslichtfaktoren, 3-Phasen-Methode) ermittelt.

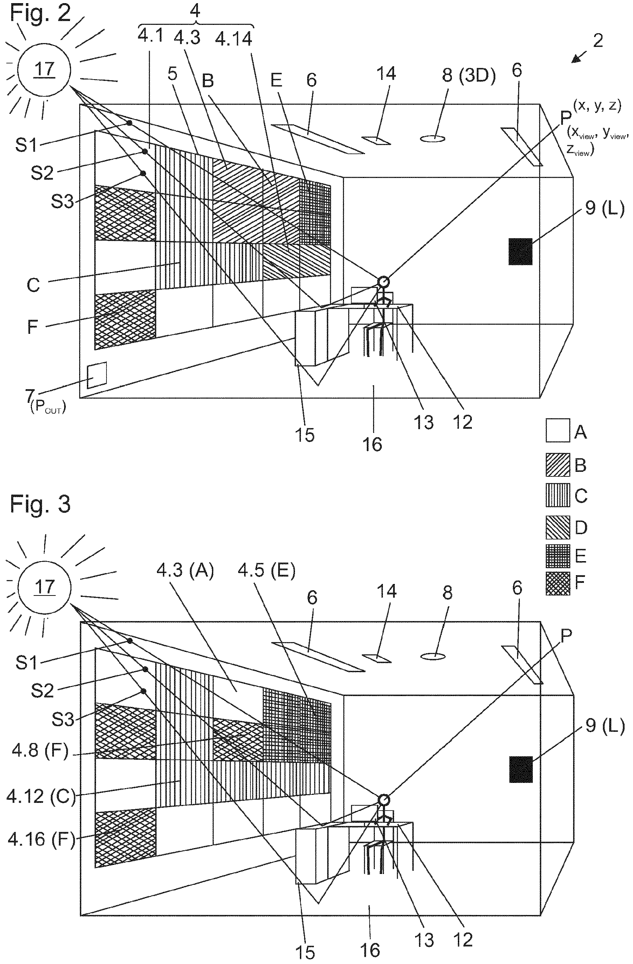

Im Zeitschritt optimiert die modelbasierte Steuerung zum Beispiel zwischen verschiedenen Konfigurationen (siehe die unterschiedliche geschalteten Beschattungsfelder weiter unten in Fig. 2 und 3).

Die Stellung des Lamellenbehangs kann durch unterschiedliche Kippwinkel über die Behanghöhe diskretisiert werden: Beispielsweise 0° im obersten Bereich, 45° über halber Höhe, 0° unter halber Höhe und hochgefahren, so dass der unterste Bereich vollständig offen ist.

Schaltbare Gläser können im Transmissionsverhalten kontinuierlich eingestellt werden, von Maximum bis nahe Null. Beispielsweise kann das Glas in drei Bereichen getrennt aktuiert werden.

Die Stellung dieser diskretisierbaren Beschattungsvorrichtung ist vor allem durch eine modell-basierte Automatik sinnvoll. Die Mannigfaltigkeit des Lösungsraum ist enorm, z.B. ist in besagter Darstellung gemäß Fig. 2 und 3 das Fassadenelement durch 5 x 4 Elemente (Beschattungsfelder) repräsentiert. Trägt jedes dieser Elemente nur drei Freiheitsgrade (offen, 50 %, 0 % Transmission) so ist der Lösungsraum 3²⁰.

Zwei beispielhafte Zielfunktion könnten nun lauten:
- Minimiere den Kühlenergiebedarf: Hierzu kann die Beschattungsvorrichtung im Sommer und ohne Anwesenheit von Personen tagsüber geschlossen werden. Bei Anwesenheit einer Person wird der Energieeintrag durch Kunstlicht dem solaren gegenübergestellt. Dann kann über die ganze Fassade bzw. die gesamte Beschattungsvorrichtung der gleiche Fahrbefehl gesendet werden.
- Optimiere den Komfort: Hier wird der Energiebedarf niederrangig behandelt.

Da es keine globalen Optima gibt, wird durch eine Präferenzeinstellung der im Raum befindlichen Person(en) die Lösungsfindung vordefiniert: Zum Beispiel kann die Person einstellen, dass sie sensitiv auf Blendung oder, gegensätzlich, es sehr hell haben möchte.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: schematisch ein Gebäude mit einem Beschattungs- und Beleuchtungssystem,
- Fig. 2 + 3: schematisch einen Raum mit unterschiedlich aktivierten Beschattungsfeldern,
- Fig. 4: ein Blickfeld mit einem Gebäude und der Sonne,
- Fig. 5: das Blickfeld aus Fig. 4 mit Lichtparametern mit darübergelegter Matrix,
- Fig. 6: schematisch einen Raum samt Außenwelt und den Matrizen der 3-Phasen-Methode,
- Fig. 7: eine Matrix mit 145 Feldern und
- Fig. 8: beispielhaft eine Formel für die 3-Phasen-Methode.

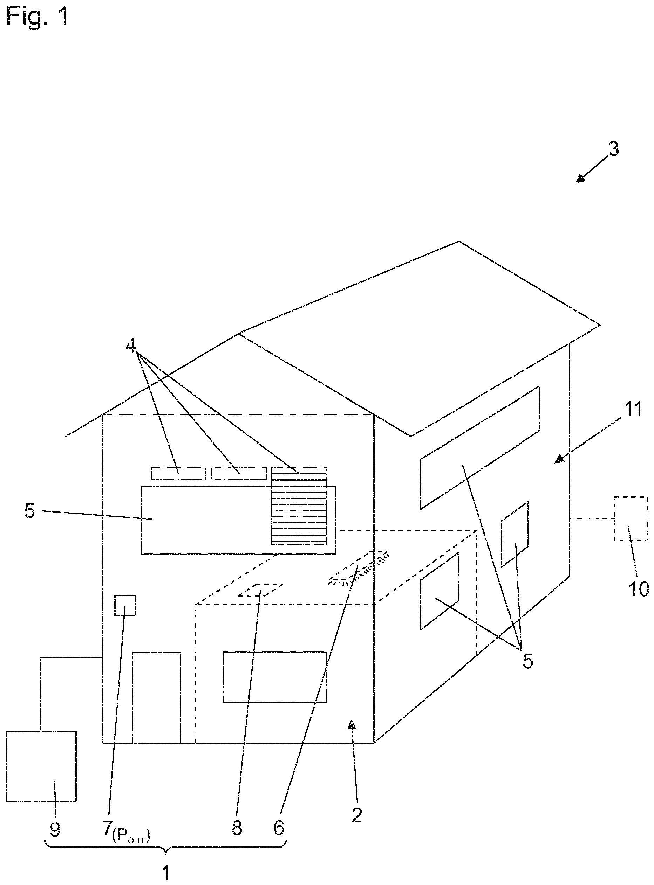

Fig. 1 zeigt schematisch ein Gebäude 3 (z. B. ein Bürogebäude) mit einer Außenfassade 11. In dieser Außenfassade 11 ist eine Vielzahl von Sichtöffnungen 5 ausgebildet. Diese Sichtöffnungen 5 können als Fenster ausgebildet sein.

Der Großteil dieser Sichtöffnungen 5 ist mit einer Beschattungsvorrichtung 4 versehen. Schematisch ist angedeutet, dass eine Beschattungsvorrichtung 4 in Form eines lamellenartigen Behangs (z. B., einer Jalousie) heruntergefahren ist.

Im Gebäude 3 ist zumindest ein Raum 2 ausgebildet (angedeutet durch die Strichlierung). In diesem Raum 2 ist eine (künstliche) Beleuchtungsvorrichtung 6 angeordnet.

Zudem ist in diesem Raum 2 wenigstens ein Innensensor 8 angeordnet.

Außerhalb des Raums 2 (z. B. an der Außenfassade 11) ist ein Außensensor 7 zum Erfassen wenigstens eines von außerhalb auf den Raum 2 wirkenden Außenparameters Pₒᵤₜ.

Weiters ist eine Steuereinheit 9 zum Ansteuern der zumindest einen Beschattungs-vorrichtung 4 und der zumindest einen Beleuchtungsvorrichtung 6 vorgesehen.

Die Beschattungsvorrichtung 4, die Beleuchtungsvorrichtung 6, der Außensensor 7, der Innensensor 8 und die Steuereinheit 9 bilden zusammen das Beschattungs- und Beleuchtungssystem 1 für den Raum 2 des Gebäudes 3.

In Fig. 1 ist auch angedeutet, dass das Gebäude 3 über ein Gebäudeautomatisierungssystem 10 zum Überwachen, Steuern und Regeln von Anlagen im Gebäude 3 verfügt. Das Beschattungs- und Beleuchtungssystem 1 kann integraler Bestandteil dieses Gebäudeautomatisierungssystems 10 sein.

In Fig. 2 ist schematisch ein Raum 2 in einem Gebäude 3 dargestellt, wobei dieser Raum 2 über ein Beschattungs- und Beleuchtungssystem 1 verfügt.

Im Raum 2 sind Möbel 12 (z. B. Schreibtisch) angeordnet. An diesem als Schreibtisch ausgebildeten Möbel 12 sitzt eine Person P.

Ein Bildschirm 13 ist auf dem Schreibtisch angeordnet. Dieser Bildschirm 13 kann als Bedienoberfläche für die Steuereinheit 9 fungieren.

An der Decke des Raumes 2 ist ein Innensensor 8 angeordnet. Dieser Innensensor 8 ist dazu konfiguriert, ein 3D-Abbilds 3D des Raumes 2, zumindest eine Position x, y, z der im Raum 2 befindlichen Person P in diesem 3D-Abbild 3D und eine Blickrichtung x_{view}, y_{view}, z_{view} dieser zumindest einen Person P zu erfassen.

Zudem befindet sich an der Decke des Raumes 2 eine Beleuchtungsvorrichtung 6, wobei in diesem Fall zwei Leuchtmittel dieser Beleuchtungsvorrichtung 6 dargestellt sind.

Weiters ist an der Decke des Raumes 2 ein weiterer Sensor 14 angeordnet. Dieser Sensor 14 dient mit seinen erfassten Werten der Steuerung des Lichtstroms auf Zielbeleuchtungsstärken. Dieser Typ Sensor wird im allgemeinen Look-Down-Sensor genannt. Dieser Sensor 14 kann auch Teil des Innensensors 8 sein.

Vom Innensensor 8 können auch optische Eigenschaften (z. B. Reflexionsgrade) von Oberflächen (Möbeloberfläche 15 und Bodenoberfläche 16) erfasst werden.

Außerhalb des Raumes 2 ist schematisch die Sonne 17 angedeutet. Der Stand der Sonne 17 kann aus einem Weltkoordinatensystem ausgelesen werden und wird relativ zum Raum 2 gesetzt. Durch die Sichtöffnung 5 dringen Sonnenstrahlen S1, S2 und S3 in den Raum 2 ein und treffen auf die Person P. Der Sonnenstrahl S1 trifft direkt auf das Gesicht der Person P und führt zu einer Blendung. Der Sonnenstrahl S2 wird über die Möbelteiloberfläche 15 auf die Person P reflektiert. Der Sonnenstrahl S3 führt über eine Reflexion auf der Bodenoberfläche 16 zu einer Blendung der Person P.

An der Außenseite des Raums 2 ist ein Außensensor 7 angeordnet. Im Raum 2 ist die Steuereinheit 9 schematisch angedeutet. Die einzelnen Komponenten des Beschattungs- und Beleuchtungssystems 1 stehen in signaltechnischer Verbindung miteinander.

Die Steuereinheit 9 ist dazu konfiguriert, ausgehend von der erfassten Blickrichtung x_{view}, y_{view}, z_{view} und von der erfassten Position x, y, z der Person P und vom 3D-Abbild (Bezugszeichen 3D) des Raumes 2 und abhängig vom wenigstens einen Außenparameter Pₒᵤₜ ein auf die Person P, insbesondere auf das Gesicht der Person P, wirkenden Lichtparameter L zu ermitteln. Dieser Lichtparameter L wird dann von der Steuereinheit 9 wieder als Basis für die die Ansteuerung der zumindest einen Beschattungsvorrichtung 4 und/oder der zumindest einen Beleuchtungsvorrichtung 6 verwendet.

Im in Fig. 2 dargestellten Ausführungsbeispiel ist die Beschattungsvorrichtung 4 als Fenster mit einem intelligenten Glas ausgebildet. Dieses intelligente Glas ist in diesem Fall in 4 x 5 Beschattungsfelder 4.1 bis 4.20 unterteilt. Zur Beibehaltung der Übersichtlichkeit sind nur die Beschattungsfelder 4.1, 4.3 und 4.14 mit Bezugszeichen angeführt. Die Beschattungsfelder 4.1 bis 4.20 bilden zusammen die Beschattungsvorrichtung 4.

Jedes Beschattungsfeld 4.1 bis 4.20 kann mehrere - in diesem Fall sechs - unterschiedliche Abschattungsstellungen A, B, C, D, E und F einnehmen. Bei der Abschaltungsstellung A liegt keine Abdunkelung oder Tönung des entsprechenden Feldes vor. Bei Abschaltungsstellung F liegt die maximale Verdunkelung des entsprechenden Feldes vor. Die Abschaltungsstellung B, C, D und E bilden unterschiedliche Abschattungsstufen (z. B. 20 %, 40 %, 60 % und 80 %) der Maximalabdunkelung.

Wenn die Beschattungsfelder 4.1 bis 4.20 - wie dargestellt - Teil eines intelligenten Glases sind, so ist es möglich in 1-%-Stufen oder feineren Abschattungsstufen zu stellen (bei 1-%-Stufen gibt es 101 Abschattungsstellungen).

Beschattungsfelder 4.1 bis 4.n können aber auch - im Gegensatz zur Darstellung in Fig. 2 - über mechanische Beschattungselemente erzeugt werden. So kann eine Fensterfront zum Beispiel von mehreren Jalousien abgedeckt werden. Somit bildet jedes Fenster dieser Fensterfront ein eigenes Beschattungsfeld 4.1 bis 4.n. Zudem kann dieses einzelne Fenster wieder in sich unterteilt werden. So kann die Jalousie unterschiedlich weit heruntergefahren werden, sodass sich eine andere Abschattungsstufe ergibt. Zudem können die Lamellen der Jalousie wieder unterschiedliche Winkelstellungen einnehmen (z. B. 15° und 45° und 90°), sodass sich wiederum mehrere Abschattungsstufen A bis F ergeben.

Wie in Fig. 2 veranschaulicht, dienen die beiden Felder mit der Abschattungsstufe F dazu, dass die Strahlen S2 und S3 - die ansonsten zu einer Reflexionsblendung über Oberflächen des Raumes 2 führen - vom Eindringen in den Raum 2 abgehalten werden oder zumindest die auftreffende Intensität verringert wird. Die direkt auf die Person P treffenden Sonnenstrahlen S1 können auch durch entsprechende Abschattungen der Felder entschärft werden. Hier ist aber keine komplette Abdunkelung notwendig, da durch die aktuelle Blickrichtung die Sonne nur sehr seitlich im Blickfeld ist. Für die detektierte Blickrichtung x_{view}, y_{view}, z_{view} sind die von unten eintreffenden, reflektierten Sonnenstrahlen S2 und S3 für die Person P unangenehmer, weshalb diese stärker abgedunkelt werden.

Natürlich können hier je nach individuellen Wünschen auch andere Einstellungen vorgenommen werden.

Auch sind solche Abschattungen und Einstellungen nicht auf intelligentes Glas beschränkt. Vielmehr kann dies auch bei Beschattungsvorrichtungen 4 in Form von Jalousien, Rollläden, usw. auf gleiche Art und Weise funktionieren.

Aber nicht nur die Beschattungsvorrichtung 4 kann auf diese Weise abhängig vom erfassten Lichtparameter L angesteuert werden, sondern es kann auch die Beleuchtungsvorrichtung 6 entsprechend angesteuert werden. So kann bei frontal auf dem Gesicht auftreffenden Sonnenstrahlen S1 eine komplette Abdunkelung über die Beschattungsvorrichtung 4 notwendig sein, wobei dann aber wieder die Beleuchtungsvorrichtung 6 stärker eingeschaltet werden muss.

In Fig. 3 ist ein weiteres Ausführungsbeispiel eines Beschattungs-Beleuchtungssystems 1 für einen Raum 2 eines Gebäudes 3 dargestellt, wobei hier eine andere Einstellung für die Beschattung getroffen wurde. Aufgrund von anderen Grundeinstellungen oder aufgrund von individuellen Einstellungen der im Raum 2 befindlichen Person P, kann sich bei denselben Außenparametern Pₒᵤₜ eine andere Abschattung über die Beschattungsvorrichtung 4 ergeben.

So ist das Beschattungsfeld 4.8 komplett abgedunkelt mit der Abschattungsstufe F. Dadurch wird eine direkte Sonneneinstrahlung verhindert auf den Kopf der Person P verhindert. Gleichzeitig ist aber das oberhalb angeordnete Beschattungsfeld 4.3 gar nicht abgedunkelt (Abschattungsstufe A). Auch sind bei diesen Einstellungen die Abschattungsfelder 4.12 bis 4.14 mit der Abschattungsstufe C eingestellt, sodass eine höhere Reflexion über den Sonnenstrahl S2 zugelassen wird. Dagegen sind die Beschattungsfelder 4.4, 4.5, 4.9 und 4.10 auf die Abschattungsstufe E eingestellt.

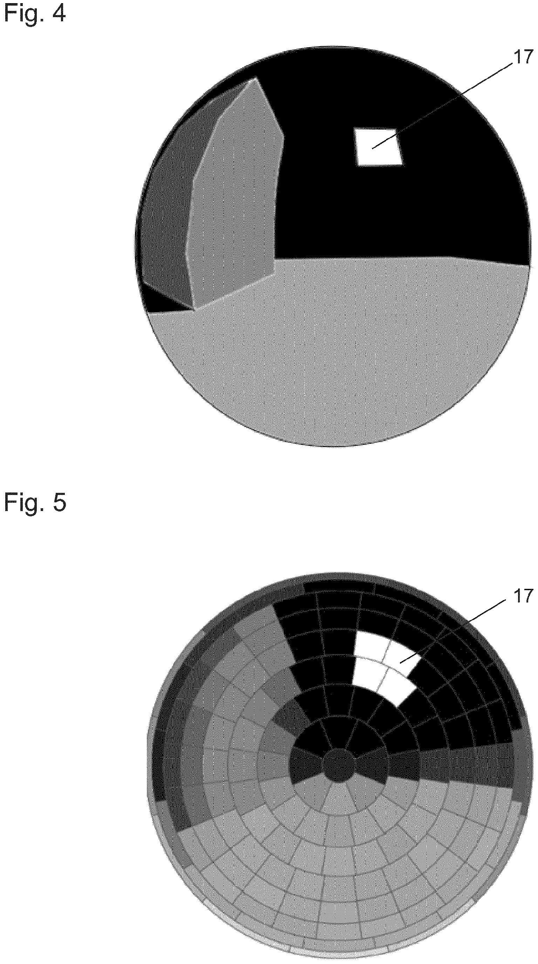

In den Fig. 4 und 5 wird näher auf eine mögliche Ausführungsform zur Ermittlung der Lichtparameter L eingegangen. In Fig. 4 ist schematisch ein (hemisphärisches, 180° umfassendes) Blickfeld einer Person P, die in diesem Fall im Außenraum steht, dargestellt, wobei im linken Bereich ein Gebäude steht, im unteren Bereich der Boden ist und im oberen mittleren Bereich die Sonne 17 mit ca. einem halben Grad Größe und dem deutlich größeren, stark hellen Bereich um die Sonne herum steht. Die Helligkeit der Sonne 17 selbst ist in dieser Darstellung gemäß Fig. 4 bereits in eine Diskretisierung des Himmelsgewölbes übergeführt worden, weshalb die Darstellung der Sonne 17 ein viereckiger Raumwinkelbereich ist.

Über dieses Blickfeld kann eine Matrix gelegt werden (siehe Fig. 5). In diesem Fall eine Matrix mit 145 Feldern. Diese Darstellung soll die Viewmatrix der 3-Phasen-Methode im Backward Raytracing Software Paket Radiance wiedergeben. Der Bereich der Sonne 17 in Fig.4 wird nun auf diese Matrixfelder aufgeteilt. Dann wird - wie in Fig. 5 dargestellt - für jedes Feld ein bestimmter Wert (z. B. die Beleuchtungsstärke) errechnet und die Summe aller Feldbeiträge berechnet. Aus diesem lässt sich das Blendungspotenzial evaluieren. Vor allem die Matrixfelder im Bereich der Sonne 17 sind für Blendung hauptverantwortlich. Die grauen Oberflächen der restlichen Welt im Blickfeld hingegen sind unkritisch für das Blenden.

Diese Viewmatrix in Fig.5. ist für jeden momentanen Blickpunkt und die momentane Blickrichtung zu berechnen.

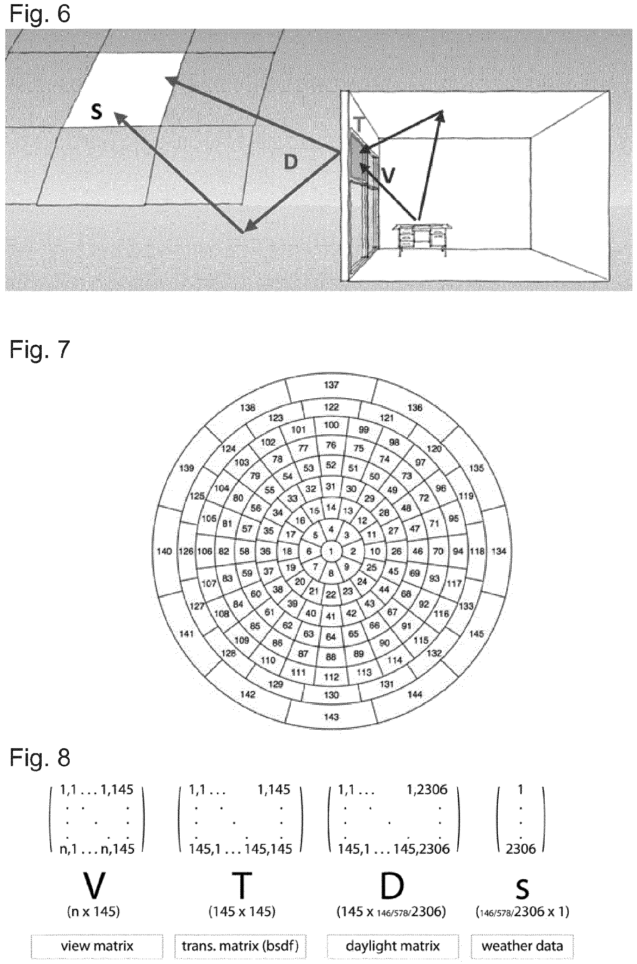

In Fig. 6 ist schematisch ein Raum in Bezug auf die Außenwelt dargestellt, wobei dies der Erklärung der 3-Phasen-Methode dient.

In der 3-Phasen-Methode (Radiance) wird die Übertragung von einem diskreten Himmelsbereich (Skymatrix S) an einen Berechnungspunkt im Raum über drei Matrizen berechnet. Die Tageslichtmatrix D (daylight matrix) beschreibt in diskreten Rastern, wieviel vom Fassadenpunkt vom diskreten Himmel (Skymatrix S) zu sehen ist. Die Transmissionsmatrix T beschreibt wiederum diskretisiert, wieviel aus einem Halbraumbereich außen in einen anderen Halbraum innen übertragen wird. Die Viewmatrix V beschreibt diskretisiert, wieviel vom Berechnungspunkt aus dem Halbraum eintrifft.

Die Diskretisierung kann in 145 Bereichen erfolgen. Dazu ist in Fig. 7 beispielhaft ein solches Raster mit 145 Feldern dargestellt.

In Fig. 8 ist beispielhaft eine Berechnungsformel für die Beleuchtungsstärke angegeben.

Die Beleuchtungsstärke an n Berechnungspunkten kann mittels Matrizenmultiplikation berechnet werden. Sie ist somit eine Funktion von V, T, D und S, f(V,T,D,S).

Genauere Erweiterungen der 3-Phasen-Methode sind in der Wissenschaft verfügbar.

Während die Matrizen V, D und S im Zeitschritt konstant sind, kann nun T variiert werden. Die Variation beschreibt alle möglichen Stellungen des Beschattungs- und Beleuchtungssystems. Und für jede Stellung wird nun ein Parameter berechnet, konkret für Blendung Li = f(V,T,D,S), oder für Beleuchtungsstärke Eᵢ = f(V,T,D,S) oder für den solaren Eintrag Q der Energietrag auf Basis einer Außenbestrahlungsstärke und dem Wert g (winkelabhängige Gesamtenergiedurchlasskenngröße). Je nach Zielfunktion wird das optimale Fassadensetting gewählt und die Beschattungsvorrichtung 4 und die Beleuchtungsvorrichtung 6 schließlich aktiviert.

Die 3-Phasen-Methode kann durch Einbeziehen weiterer Transfereigenschaften auf fünf oder sechs Phasen erweitert sein. Es können natürlich auch andere Methoden angewendet werden.

Dadurch ändert sich dann in einem nächsten Zeitschritt der Himmelszustand (Skymatrix S) und die Optimierung erfolgt erneut. Eventuell hat sich auch die Viewmatrix V geändert, wodurch sich wieder eine Änderung der Beschattung oder Beleuchtung ergeben kann. Zum Beispiel kann bei einer zu starken Abschattung des Schreibtischs automatisch die Beleuchtungsvorrichtung 6 im Bereich des Schreibtischs heller geschaltet werden.

### Bezugszeichenliste:

- 1: Beschattungs- und Beleuchtungssystem
- 2: Raum
- 3: Gebäude
- 4: Beschattungsvorrichtung
- 4.1 bis 4.n: Beschattungsfelder
- 5: Sichtöffnungen
- 6: Beleuchtungsvorrichtung
- 7: Außensensor
- 8: Innensensor
- 9: Steuereinheit
- 10: Gebäudeautomatisierungssystem
- 11: Außenfassade
- 12: Möbel (Schreibtisch)
- 13: Bildschirm
- 14: Sensor
- 15: Möbeloberfläche
- 16: Bodenoberfläche
- 17: Sonne
- Pₒᵤₜ: Außenparameter
- 3D: 3D-Abbild
- x, y, z: Position der Person im Raum
- P: Person
- x_{view}, y_{view}, z_{view}: Blickrichtung
- L: Lichtparameter
- S1, S2, S3: Sonnenstrahlen
- A, B, C, D, E, F: Abschattungsstufen
- V: Viewmatrix
- T: Transmissionsmatrix
- D: Tageslichtmatrix
- S: Skymatrix

## Patentansprüche

1. Beschattungs- und Beleuchtungssystem (1) für einen Raum (2) in einem Gebäude (3), mit
- zumindest einer Beschattungsvorrichtung (4) zum Beschatten von Sichtöffnungen (5), insbesondere von Fenstern, des Gebäudes (3),
- zumindest einer Beleuchtungsvorrichtung (6) zum Beleuchten des Raumes (2),
- zumindest einem Außensensor (7) zum Erfassen wenigstens eines von außerhalb auf den Raum (2) wirkenden Außenparameters (Pₒᵤₜ),
- zumindest einem Innensensor (8) zum Erfassen
i. eines 3D-Abbilds (3D) des Raumes (2),
ii. zumindest einer Position (x, y, z) einer im Raum (2) befindlichen Person (P) in diesem 3D-Abbild (3D) und
iii. einer Blickrichtung (x_{view}, y_{view}, z_{view}) dieser zumindest einen Person (P)
und
- einer Steuereinheit (9) zum Ansteuern der zumindest einen Beschattungs-vorrichtung (4) und der zumindest einen Beleuchtungsvorrichtung (6), wobei die zumindest eine Beschattungsvorrichtung (4) und die zumindest eine Beleuchtungsvorrichtung (6) durch die Steuereinheit (9) in Abhängigkeit der vom Außensensor (7) und vom Innensensor (8) gemessenen Werte ansteuerbar sind,
**dadurch gekennzeichnet, dass** abhängig von der erfassten Blickrichtung (x_{view}, y_{view}, z_{view}) und von der erfassten Position (x, y, z) und vom 3D-Abbild (3D) des Raumes (2) und abhängig vom wenigstens einen Außenparameter (Pₒᵤₜ) ein auf die Person (P), insbesondere auf ein Auge der Person (P), wirkender Lichtparameter (L) ermittelbar ist, wobei abhängig von diesem auf die Person (P) wirkenden Lichtparameter (L) die zumindest eine Beschattungsvorrichtung (4) und/oder die zumindest eine Beleuchtungsvorrichtung (6) ansteuerbar sind/ist.

2. Beschattungs- und Beleuchtungssystem nach Anspruch 1, **dadurch gekennzeichnet, dass** der wenigstens eine Außenparameter (Pₒᵤₜ) auf einer Bestrahlungsstärke und/oder einer Beleuchtungsstärke und/oder einer Strahlungsdichte und/oder einer Außentemperatur basiert.

3. Beschattungs- und Beleuchtungssystem nach Anspruch 2, **dadurch gekennzeichnet, dass** der wenigstens eine Außenparameter (Pₒᵤₜ) vom Außensensor (7) gemessene und/oder berechnete Werte und/oder Verhältnisse basierend auf der Bestrahlungsstärke und/oder der Beleuchtungsstärke und/oder der Strahlungsdichte und/oder der Außentemperatur repräsentiert.

4. Beschattungs- und Beleuchtungssystem nach einem der Ansprüche 1 bis 3, **dadurch gekennzeichnet, dass** der zumindest eine Außensensor (7) ein Pyranometer ist.

5. Beschattungs- und Beleuchtungssystem nach einem der Ansprüche 1 bis 4, **dadurch gekennzeichnet, dass** der zumindest eine Innensensor (8) zum Erfassen des 3D-Abbilds (3D) eine TOF-Kamera ist.

6. Beschattungs- und Beleuchtungssystem nach einem der Ansprüche 1 bis 5, **dadurch gekennzeichnet, dass** mehrere Innensensoren (8) zum Erfassen mehrerer Personen (P) im Raum (2) angeordnet sind.

7. Beschattungs- und Beleuchtungssystem nach einem der Ansprüche 1 bis 6, **dadurch gekennzeichnet, dass** das 3D-Abbild (3D) in einem Koordinatensystem angeordnete Oberflächen enthält, wobei über den zumindest einen Innensensor (8) Reflexionsgrade dieser Oberflächen des Raumes (2), vorzugsweise durch Schätzung oder Berechnung, ermittelbar sind.

8. Beschattungs- und Beleuchtungssystem nach einem der Ansprüche 1 bis 7, **dadurch gekennzeichnet, dass** der Lichtparameter (L) einem Beleuchtungsparameter entspricht, wobei dieser Beleuchtungsparameter durch die vertikale Beleuchtungsstärke definiert ist.

9. Beschattungs- und Beleuchtungssystem nach einem der Ansprüche 1 bis 7, **dadurch gekennzeichnet, dass** der Lichtparameter (L) einem Blendungsparameter entspricht, wobei dieser Blendungsparameter auf Basis einer Daylight Glare Probability definiert ist oder einem Näherungsverfahren einer Blendungsmetrik definiert ist.

10. Beschattungs- und Beleuchtungssystem nach einem der Ansprüche 1 bis 9, **dadurch gekennzeichnet, dass** die Beschattungsvorrichtung (4) als mechanisches Beschattungselement, z. B. als Jalousie, als Vorhang, als Markise oder als Rollladen, und/oder als intelligentes Glas ausgebildet ist.

11. Beschattungs- und Beleuchtungssystem nach einem der Ansprüche 1 bis 10, **dadurch gekennzeichnet, dass** die Beschattungsvorrichtung (4) mehrere, vorzugsweise matrixartig angeordnete, Beschattungsfelder (4.1-4.n) aufweist, wobei für jedes Beschattungsfeld (4.1-4.n) zumindest zwei, vorzugsweise zumindest vier, Abschattungsstufen (A, B, C, D, E, F) einstellbar sind.

12. Beschattungs- und Beleuchtungssystem nach einem der Ansprüche 1 bis 11, **dadurch gekennzeichnet, dass** die Beleuchtungsvorrichtung (6) ein Leuchtmittel, beispielsweise eine Leuchtdiode, einen, vorzugsweise eingebauten, angebauten, abgehängt oder alleinstehenden, Träger und ein Stromzuführmittel aufweist.

13. Beschattungs- und Beleuchtungssystem nach einem der Ansprüche 1 bis 12, **dadurch gekennzeichnet, dass** die Steuereinheit (9) als Schaltschrank mit einer Recheneinheit und mit der Recheneinheit verbindbaren Modulen für die Beleuchtungsvorrichtung (6) und für die Beschattungsvorrichtung (4) ausgebildet ist.

14. Gebäudeautomatisierungssystem (10) zum Überwachen, Steuern und Regeln von Anlagen in einem Gebäude (3), mit einem Beschattungs- und Beleuchtungssystem (1) nach einem der Ansprüche 1 bis 13.

## Claims

1. Shading and illumination system (1) for a room (2) in a building (3), with
- at least one shading device (4) for shading viewing openings (5), in particular windows, of the building (3),
- at least one illumination device (6) for illuminating the room (2),
- at least one external sensor (7) for detecting at least one external parameter (Pₒᵤₜ) acting on the room (2) from outside,
- at least one internal sensor (8) for detecting
i. a 3D image (3D) of the room (2),
ii. at least one position (x, y, z) of a person (P) present in the room (2) in this 3D image (3D) and
iii. a viewing direction (x_{view}, y_{view}, z_{view}) of this at least one person (P) and
- a control unit (9) for actuating the at least one shading device (4) and the at least one illumination device (6), wherein the at least one shading device (4) and the at least one illumination device (6) are actuatable by the control unit (9) depending on the values measured by the external sensor (7) and by the internal sensor (8),
**characterized in that** a light parameter (L) acting on the person (P), in particular on an eye of the person (P), is determinable depending on the detected viewing direction (x_{view}, y_{view}, z_{view}) and on the detected position (x, y, z) and on the 3D image (3D) of the room (2) and depending on the at least one external parameter (Pₒᵤₜ), wherein the at least one shading device (4) and/or the at least one illumination device (6) are/is actuatable depending on this light parameter (L) acting on the person (P).

2. Shading and illumination system according to claim 1, **characterized in that** the at least one external parameter (Pₒᵤₜ) is based on an irradiance and/or an illuminance and/or a radiation density and/or an external temperature.

3. Shading and illumination system according to claim 2, **characterized in that** the at least one external parameter (Pₒᵤₜ) represents values measured and/or calculated by the external sensor (7) and/or conditions based on the irradiance and/or the illuminance and/or the radiation density and/or the external temperature.

4. Shading and illumination system according to one of the claims 1 to 3, **characterized in that** the at least one external sensor (7) is a pyranometer.

5. Shading and illumination system according to one of the claims 1 to 4, **characterized in that** the at least one internal sensor (8) for detecting the 3D image (3D) is a ToF camera.

6. Shading and illumination system according to one of the claims 1 to 5, **characterized in that** several internal sensors (8) for detecting several persons (P) in the room (2) are arranged.

7. Shading and illumination system according to one of the claims 1 to 6, **characterized in that** the 3D image (3D) contains surfaces arranged in a coordinate system, wherein reflectances of these surfaces of the room (2) are determinable via the at least one internal sensor (8), preferably by estimation or calculation.

8. Shading and illumination system according to one of the claims 1 to 7, **characterized in that** the light parameter (L) corresponds to an illumination parameter, wherein this illumination parameter is defined by the vertical illuminance.

9. Shading and illumination system according to one of the claims 1 to 7, **characterized in that** the light parameter (L) corresponds to a glare parameter, wherein this glare parameter is defined on the basis of a daylight glare probability or an approximation method of glare metrics.

10. Shading and illumination system according to one of the claims 1 to 9, **characterized in that** the shading device (4) is formed as a mechanical shading element, e.g. as a venetian blind, as a curtain, as an awning or as a roller shutter, and/or as intelligent glass.

11. Shading and illumination system according to one of the claims 1 to 10, **characterized in that** the shading device (4) has several shading panels (4.1-4.n), preferably arranged in the manner of a matrix, wherein at least two, preferably at least four, shading increments (A, B, C, D, E, F) can be set for each shading panel (4.1-4.n).

12. Shading and illumination system according to one of the claims 1 to 11, **characterized in that** the illumination device (6) has a lighting means, for example a light-emitting diode, a support, which is preferably integrated, mounted, suspended or standalone, and a power supply means.

13. Shading and illumination system according to one of the claims 1 to 12, **characterized in that** the control unit (9) is formed as a switch cabinet with an arithmetic unit and modules connectable to the arithmetic unit for the illumination device (6) and for the shading device (4).

14. Building automation system (10) for monitoring, controlling and adjusting facilities in a building (3), with a shading and illumination system (1) according to one of the claims 1 to 13.

## Revendications

1. Système d'ombrage et d'éclairage (1) pour une pièce (2) dans un bâtiment (3), avec
- au moins un dispositif d'ombrage (4) pour ombrager des ouvertures d'observation (5), en particulier des fenêtres, du bâtiment (3),
- au moins un dispositif d'éclairage (6) pour éclairer la pièce (2),
- au moins un capteur extérieur (7) pour détecter au moins un paramètre extérieur (Pₒᵤₜ) agissant sur la pièce (2) depuis l'extérieur,
- au moins un capteur intérieur (8) pour détecter
i. une reproduction 3D (3D) de la pièce (2),
ii. au moins une position (x, y, z) d'une personne (P) se trouvant dans la pièce (2) sur ladite reproduction 3D (3D), et
iii. une direction du regard (x_{view}, y_{view}, z_{view}) de ladite au moins une personne (P), et
- une unité de commande (9) pour piloter l'au moins un dispositif d'ombrage (4) et l'au moins un dispositif d'éclairage (6), dans lequel l'au moins un dispositif d'ombrage (4) et l'au moins un dispositif d'éclairage (6) peuvent être pilotés par l'unité de commande (9) en fonction des valeurs mesurées par le capteur extérieur (7) et le capteur intérieur (8),
**caractérisé en ce qu'**un paramètre lumineux (L) agissant sur la personne (P), en particulier sur un oeil de la personne (P), peut être déterminé en fonction de la direction du regard (x_{view}, y_{view}, z_{view}) détectée et de la position (x, y, z) détectée et de la reproduction 3D (3D) de la pièce (2) et en fonction d'au moins un paramètre extérieur (Pₒᵤₜ), dans lequel l'au moins un dispositif d'ombrage (4) et/ou l'au moins un dispositif d'éclairage (6) peut être piloté/peuvent être pilotés en fonction dudit paramètre de lumière (L) agissant sur la personne (P).

2. Système d'ombrage et d'éclairage selon la revendication 1, **caractérisé en ce que** l'au moins un paramètre extérieur (Pₒᵤₜ) se base sur une intensité de rayonnement et/ou une intensité d'éclairage et/ou une densité de rayonnement et/ou une température extérieure.

3. Système d'ombrage et d'éclairage selon la revendication 2, **caractérisé en ce que** l'au moins un paramètre extérieur (Pₒᵤₜ) représente des valeurs et/ou des rapports mesurés et/ou calculés par le capteur extérieur (7) sur la base de l'intensité de rayonnement et/ou de l'intensité d'éclairage et/ou de la densité de rayonnement et/ou de la température extérieure.

4. Système d'ombrage et d'éclairage selon l'une quelconque des revendications 1 à 3, **caractérisé en ce que** l'au moins un capteur extérieur (7) est un pyranomètre.

5. Système d'ombrage et d'éclairage selon l'une quelconque des revendications 1 à 4, **caractérisé en ce que** l'au moins un capteur intérieur (8) pour détecter la reproduction 3D (3D) est une caméra TOF [Time of Flight - à temps de vol].

6. Système d'ombrage et d'éclairage selon l'une quelconque des revendications 1 à 5, **caractérisé en ce que** plusieurs capteurs intérieurs (8) pour détecter plusieurs personnes (P) sont disposés dans la pièce (2).

7. Système d'ombrage et d'éclairage selon l'une quelconque des revendications 1 à 6, **caractérisé en ce que** la reproduction 3D (3D) contient des surfaces disposées dans un système de coordonnées, dans lequel des degrés de réflexion desdites surfaces de la pièce (2) peuvent être déterminés, de préférence par estimation ou calcul, par l'intermédiaire de l'au moins un capteur intérieur (8).

8. Système d'ombrage et d'éclairage selon l'une quelconque des revendications 1 à 7, **caractérisé en ce que** le paramètre de lumière (L) correspond à un paramètre d'éclairage, dans lequel ledit paramètre d'éclairage est défini par l'intensité d'éclairage verticale.

9. Système d'ombrage et d'éclairage selon l'une quelconque des revendications 1 à 7, **caractérisé en ce que** le paramètre de lumière (L) correspond à un paramètre d'éblouissement, dans lequel ledit paramètre d'éblouissement est défini sur la base d'un Daylight Glare Probability et d'un procédé d'approximation d'une métrique d'éblouissement.

10. Système d'ombrage et d'éclairage selon l'une quelconque des revendications 1 à 9, **caractérisé en ce que** le dispositif d'ombrage (4) est réalisé en tant qu'élément d'ombrage mécanique, par exemple en tant que store vénitien, en tant que rideau, en tant que store ou en tant que volet roulant, et/ou est réalisé en tant qu'une vitre intelligente.

11. Système d'ombrage et d'éclairage selon l'une quelconque des revendications 1 à 10, **caractérisé en ce que** le dispositif d'ombrage (4) présente plusieurs champs d'ombrage (4.1 - 4.n) disposés de préférence à la manière d'une matrice, dans lequel au moins deux, de préférence au moins quatre, niveaux d'ombrage (A, B, C, D, E, F) peuvent être réglés pour chaque champ d'ombrage (4.1 - 4.n).

12. Système d'ombrage et d'éclairage selon l'une quelconque des revendications 1 à 11, **caractérisé en ce que** le dispositif d'éclairage (6) présente un moyen lumineux, par exemple une diode électroluminescente, un support de préférence encastré, monté, suspendu ou isolé et un moyen d'alimentation en courant.

13. Système d'ombrage et d'éclairage selon l'une quelconque des revendications 1 à 12, **caractérisé en ce que** l'unité de commande (9) est réalisée en tant qu'une armoire de distribution avec une unité de calcul et des modules pouvant être reliés à l'unité de calcul pour le dispositif d'éclairage (6) et pour le dispositif d'ombrage (4).

14. Système d'automatisation de bâtiment (10) pour surveiller, commander et réguler des équipements dans un bâtiment (3), avec un système d'ombrage et d'éclairage (1) selon l'une quelconque des revendications 1 à 13.
